(19) **Europäisches Patentamt / European Patent Office / Office européen des brevets**

(11) **EP 1 105 751 B1**

(12) **FASCICULE DE BREVET EUROPEEN**

(45) Date de publication et mention
de la délivrance du brevet:
**02.04.2008 Bulletin 2008/14**

(21) Numéro de dépôt: **99936745.1**

(22) Date de dépôt: **17.08.1999**

(51) Int Cl.:
*G01T 1/20* (2006.01)

(86) Numéro de dépôt international:
**PCT/FR1999/002000**

(87) Numéro de publication internationale:
**WO 2000/011496 (02.03.2000 Gazette 2000/09)**

(54) **PROCEDE DE SIMULATION DE LA REPONSE D'UN DETECTEUR DE RAYONNEMENTS EMIS PAR DES OBJETS RADIOACTIFS ET PROCEDE DE CONTROLE D'ELEMENTS DE COMBUSTIBLE NUCLEAIRE UTILISANT CETTE SIMULATION**

VERFAHREN ZUM SIMULIEREN DER ANTWORT EINES DETEKTORS FÜR DURCH RADIOAKTIVE ELEMENTE EMITTIERTE STRAHLUNGEN UND VERFAHREN ZUR KONTROLLE VON KERNBRENNSTABBÜNDELN UNTER VERWENDUNG DIESER SIMULATION

METHOD FOR SIMULATING THE RESPONSE OF A DETECTOR OF RADIATION EMITTED BY RADIOACTIVE OBJECTS AND METHOD FOR CONTROLLING NUCLEAR FUEL ELEMENTS USING SAID SIMULATION

(84) Etats contractants désignés:
**BE DE ES GB SE**

(30) Priorité: **18.08.1998 FR 9810513**

(43) Date de publication de la demande:
**13.06.2001 Bulletin 2001/24**

(73) Titulaire: **COMPAGNIE GENERALE DES MATIERES NUCLEAIRES**
**78140 Velizy Villacoublay (FR)**

(72) Inventeur: **REICHENAUER, Patrick**
**F-04100 Manosque (FR)**

(74) Mandataire: **Audier, Philippe André et al**
**Brevatome**
**3, rue du Docteur Lancereaux**
**75008 Paris (FR)**

(56) Documents cités:
**EP-A- 0 009 450          EP-A- 0 280 925**
**WO-A-98/19179          US-A- 5 282 133**

- **PATENT ABSTRACTS OF JAPAN vol. 016, no. 197 (P-1350), 12 mai 1992 (1992-05-12) & JP 04 029083 A (TOSHIBA CORP), 31 janvier 1992 (1992-01-31)**
- **PATENT ABSTRACTS OF JAPAN vol. 014, no. 482 (P-1119), 19 octobre 1990 (1990-10-19) & JP 02 194397 A (MITSUBISHI ATOM POWER IND INC), 31 juillet 1990 (1990-07-31)**

**Description**

**DOMAINE TECHNIQUE**

La présente invention concerne un procédé de simulation de la réponse d'un détecteur de rayonnements émis par des objets radioactifs ainsi qu'un procédé de contrôle d'éléments de combustible nucléaire utilisant cette simulation.

Elle s'applique en particulier au contrôle de crayons de combustible nucléaire (« nuclear fuel rods »), qui comprennent des empilements de pastilles de ce combustible, ces pastilles émettant des rayonnements γ.

**ÉTAT DE LA TECHNIQUE ANTÉRIEURE**

Il est connu de contrôler un ensemble de tels crayons afin de vérifier l'homogénéité des pastilles d'une catégorie choisie.

Pour ce faire on réalise un étalonnage préliminaire de la chaîne de mesure de rayonnements γ qui est utilisée pour le contrôle. Le détecteur de cette chaîne est par exemple celui qui est décrit dans les documents FR-A-2437002, EP-A-0009450 et JP-A-1527161 et qui comprend un scintillateur annulaire, ce dernier étant de préférence en iodure de sodium activé au thallium NaI(Tl).

Cet étalonnage consiste également à construire des crayons particuliers et à les faire passer devant le détecteur pour obtenir ce qu'on appelle en statistique des droites de régression qui donnent ici la réponse du détecteur aux mélanges de poudres composant les pastilles, selon la teneur de leurs composants (l'uranium et le plutonium par exemple), pour des portions homogènes des crayons ou pour des pastilles d'une catégorie isolées parmi un groupe de pastilles d'une autre catégorie.

Ceci nécessite de nombreuses mesures et un nombre également important de crayons d'étalonnage, représentatifs de ces situations typiques mais inutilisables dans un réacteur.

**EXPOSÉ DE L'INVENTION**

La présente invention a pour but de remédier aux inconvénients précédents en proposant un procédé permettant de contrôler économiquement des crayons de combustible nucléaire ou, plus généralement, des éléments de combustible nucléaire. Dans ce procédé, l'étalonnage préliminaire de la chaîne de mesure est supprimé et remplacé par une simulation de la réponse du détecteur de la chaîne de mesure c'est-à-dire du comptage effectué par cette chaîne de mesure.

On connaît, par le document EP 0280925 A, un procédé et un dispositif pour l'exploration gamma passive d'un crayon de combustible nucléaire.

De façon précise, la présente invention a tout d'abord pour objet un procédé de simulation de la réponse d'un détecteur de rayonnements émis par des objets radioactifs, conformément à la revendication 1.

Selon un mode de mise en oeuvre préféré du procédé objet de l'invention, on construit en outre des droites de régression à partir de la réponse simulée.

Le détecteur est par exemple un détecteur de rayonnements γ et l'invention s'applique tout particulièrement au cas où lesdits objets sont des éléments de combustible nucléaire.

L'invention concerne aussi un procédé de contrôle d'un ensemble d'éléments de combustible nucléaire, conformément à la revendication 5.

Les éléments sont par exemple des crayons du combustible nucléaire, ces crayons comprenant des empilements de pastilles de ce combustible nucléaire.

Dans ce cas, le détecteur comprend par exemple un scintillateur annulaire et l'on peut par exemple utiliser un scintillateur en iodure de sodium.

**BRÈVE DESCRIPTION DES DESSINS**

La présente invention sera mieux comprise à la lecture de la description d'exemples de réalisation donnés ci-après, à titre purement indicatif et nullement limitatif, en faisant référence aux dessins annexés sur lesquels:

- la figure 1 est une vue schématique d'un détecteur dont on veut simuler la réponse, selon un plan perpendiculaire à l'axe de ce détecteur et
- la figure 2 est une vue schématique du détecteur représenté dans son enceinte blindée, selon un plan parallèle à son axe.

**EP 1 105 751 B1**

## EXPOSÉ DÉTAILLÉ DE MODES DE RÉALISATION PARTICULIERS

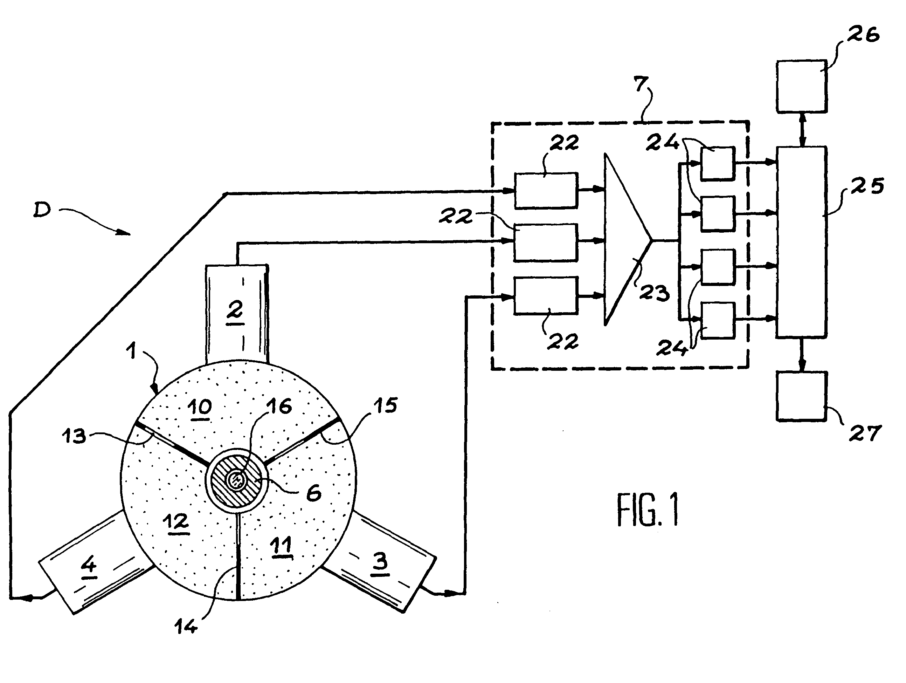

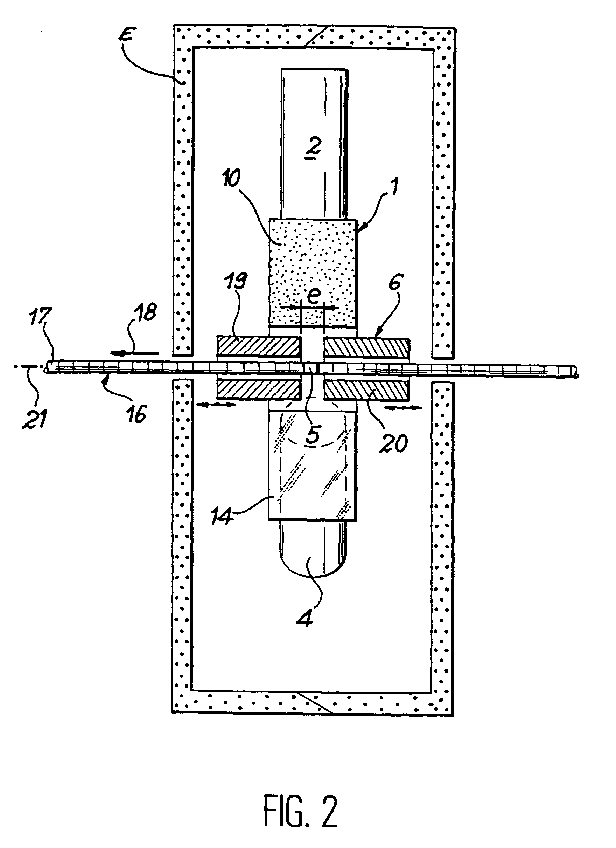

On suppose que l'on veut contrôler un lot, c'est-à-dire un ensemble, de crayons de combustible nucléaire. Chaque crayon est un empilement de pastilles contenant par exemple de l'oxyde d'uranium et/ou de l'oxyde de plutonium. On contrôle ces crayons pastilles par pastilles. Pour ce faire on utilise par exemple le détecteur décrit dans les documents mentionnés plus haut. On rappelle dans ce qui suit la structure de ce détecteur en faisant référence aux figures 1 et 2.

Il s'agit d'un détecteur de rayonnements γ qui comprend un scintillateur 1 de forme annulaire, associé à trois photomultiplicateurs 2, 3 et 4. On voit sur les figures 1 et 2 un crayon 16 que l'on veut contrôler et qui est constitué de pastilles 5. Le détecteur comprend aussi un diaphragme ou collimateur 6. Ce diaphragme limite à environ la longueur de chaque pastille le flux de rayonnements γ émis par cette pastille en direction du scintillateur. Les trois photomultiplicateurs sont régulièrement répartis à la périphérie du scintillateur. Les sorties de ces photomultiplicateurs sont reliées à des moyens électroniques de mesure formant une chaîne de comptage 7 sur laquelle on reviendra par la suite.

Le scintillateur est divisé en secteurs identiques 10, 11 et 12 optiquement isolés les uns des autres et respectivement associés aux photomultiplicateurs 2, 3 et 4. Ce scintillateur est de préférence du type à iodure de sodium, activé au thallium. On voit des couches 13, 14 et 15 d'un isolant optique tel que l'aluminium servant à l'isolation optique des secteurs du scintillateur.

On voit sur la figure 2 une enceinte blindée E protégeant le détecteur contre des rayonnements γ extérieurs qui pourraient perturber les mesures. On voit aussi que les pastilles 5 du crayon 16 sont contenues dans une gaine 17. Ce crayon est déplacé par des moyens non représentés suivant une direction 18. On voit aussi deux pièces annulaires 19 et 20 qui constituent le diaphragme 6 et sont opaques aux rayonnements γ. Ces pièces ont un écartement e qui peut être réglé par des moyens non représentés. Le déplacement du crayon à contrôler s'effectue dans l'axe 21 du détecteur.

La chaîne de comptage 7 comprend des amplificateurs-stabilisateurs 22 respectivement associés aux photomultiplicateurs, un sommateur 23, dont les entrées sont reliées à ces amplificateurs, et des analyseurs monocanaux 24 (quatre dans l'exemple de la figure 2) dont les entrées sont reliées à la sortie du sommateur 23. Un ordinateur 25 est prévu pour le traitement des signaux fournis par ces analyseurs monocanaux 24. Cet ordinateur est associé à une mémoire 26 et à des moyens d'affichage 27 et également prévu pour mettre en oeuvre le logiciel utilisé pour la simulation de la réponse du détecteur.

Lorsqu'on fait une mesure sur une pastille 5 on obtient, par sommation, un spectre total pour l'ensemble des isotopes de cette pastille (nombre d'impulsions par canal d'énergie en fonction de l'énergie) et conformément à l'invention le logiciel permet de simuler la réponse du détecteur D et donc d'obtenir un spectre sensiblement identique à ce spectre total.

La simulation de la réponse du détecteur D est purement numérique et s'appuie sur le logiciel qui est stocké dans la mémoire 26 et dans lequel on introduit : (a) des spectres d'émission radioactive représentatifs de certains radioéléments ou de leurs mélanges et qui sont également mémorisés dans la mémoire 26, (b) des caractéristiques de détection, sous forme de coefficients et de données modélisant en particulier les épaisseurs traversées par les rayonnements γ et représentant donc l'atténuation,(c) des caractéristiques d'exploitation des rayonnements γ reçus, représentant notamment l'angle d'ouverture du détecteur, les bandes d'énergie détectées et l'amplification de l'électronique et (d) un moteur mathématique pour reproduire coup par coup les rayonnements γ émis pour les radioéléments choisis ou les mélanges de radioéléments choisis.

La génération simulée des coups représentatifs du rayonnement est assurée par une méthode de Monte Carlo faisant appel à des nombres aléatoires.

On est ainsi capable d'obtenir des réponses simulées du détecteur D qui permettent de construire des droites de régression analogues à celles utilisées dans l'art antérieur mais sans procéder à une véritable mesure. Seule une calibration du détecteur est faite avec un crayon quelconque du lot à contrôler, crayon dont on a auparavant analysé la composition réelle. La réponse du détecteur D obtenue avec ce crayon permet de calculer une masse fictive qui sert à tous les calculs ultérieurs.

On donne ci-après des précisions supplémentaires sur la simulation.

Avec le logiciel on calcule un nombre de coup et l'on cherche à reproduire le nombre de coups d'une pastille réelle. Le crayon utilisé pour la calibration permet de « caler » le logiciel. On connaît la composition isotopique et le pourcentage de chaque radioélément de chaque pastille de ce crayon. Lors de la simulation on calcule, pour chaque isotope i contribuant au spectre, l'activité de cet isotope en tenant compte de toutes les énergies j et de toutes les atténuations k intervenant entre le scintillateur et une pastille fictive.

Le moteur mathématique permet de faire une répartition gaussienne de l'énergie en fonction de la résolution.

On obtient ainsi un spectre simulé pour chaque isotope i considéré. Par sommation on obtient un spectre total pour l'ensemble des isotopes. On a donc simulé la réponse du détecteur. Ensuite (ou, selon un autre mode de réalisation particulier, avant cette simulation) on utilise le crayon de calibration. On obtient pour chaque pastille de ce dernier un comptage vrai au moyen du détecteur D.

On met en oeuvre la simulation. On introduit dans l'ordinateur les paramètres concernant la pastille ainsi contrôlée. L'ordinateur calcule un spectre pour une région d'intérêt (c'est-à-dire une ou plusieurs bandes d'énergie auxquelles on s'intéresse). Si le comptage obtenu par simulation est trop fort ou au contraire pas assez fort on corrige la masse fictive jusqu'à obtenir le même comptage qu'avec la pastille réellement contrôlée (la masse fictive étant la masse de pastille pour laquelle on veut simuler une réponse de la part du détecteur et faisant intervenir non pas la forme du spectre mais l'amplitude de celui-ci). Quand on obtient un comptage équivalent, c'est-à-dire la masse fictive correcte, on sauvegarde cette valeur qui permet le calcul de tous les autres points des droites de régression.

Bien d'autres détecteurs sont utilisables à la place du détecteur à scintillateur annulaire en iodure de sodium. On pourrait par exemple utiliser un détecteur à scintillateur plan en NaI ou un détecteur à scintillateur en GeLi.

De plus l'invention permet de simuler et de contrôler d'autres éléments combustibles que les crayons mentionnés précédemment dont les pastilles sont généralement cylindriques. On pourrait par exemple simuler et contrôler des éléments en forme de plaque contenant des pastilles non cylindriques. D'ailleurs la présente invention n'est pas limitée à la simulation et au contrôle d'éléments de combustible nucléaire. Elle permet de simuler et de contrôler bien d'autres objets radioactifs comme par exemple des récipients produits en série et contenant un matériau radioactif.

On donne ci-après, à titre purement indicatif et nullement limitatif, les boucles de calculs utilisables pour la simulation de la réponse du détecteur D mentionné plus haut (figures 1 et 2) à une pastille 5 d'un combustible nucléaire formé par une matrice d'uranium contenant plusieurs isotopes du plutonium, seuls isotopes considérés dans les calculs qui suivent :

1) Début de boucle pour l'isotope (i)

$$\text{Activité}_{(i)} = \frac{Av}{A_{(i)}} \times M \times ti \times \%\text{isotope}_{(i)} \times \lambda_{(i)}$$

avec :

Av= nombre d'Avogadro=$6,022 \times 10^{23}$
$A_{(i)}$= masse atomique de l'isotope (i)
M = masse fictive de la pastille
ti = teneur isotopique=pourcentage de Pu dans la matrice
$\%\text{isotope}_{(i)}$=pourcentage de l'isotope(i) contenu dans la matrice
$\lambda_{(i)}$ = constante de désintégration de l'isotope (i)

1.1) Début de boucle pour l'énergie (j)
$\text{Résolution}_{(j)} = \text{Energie}_{(j)} \times \alpha$
$\text{Flux initial}_{(i,j)} = \text{Activité}_{(i)} \times \% \text{ émission}_{(i,j)} \times \eta/S$
avec :

$\eta$ = rendement géométrique du détecteur
$\alpha$ = pourcentage de résolution indépendant de l'énergie, défini expérimentalement
$\text{résolution}_{(j)}$=résolution du détecteur pour l'énergie (j)
s = surface du scintillateur du détecteur

1.1.1) Début de boucle pour l'élément atténuateur (k)

$$\mu_{a(i,j,k)} = \begin{bmatrix} \sigma a & + \sigma a & + Z_{(k)} \times \sigma a \\ PE_{(i,j,k)} & PP_{(i,j,k)} & C_{(i,j,k)} \end{bmatrix} \times \rho_{(k)} \times Av / A_{(k)}$$

avec :

$\sigma a$ = section efficace d'absorption photoélectrique $PE_{(ij,k)}$
$\sigma a$=section efficace d'absorption Compton $C_{(i,j,k)}$
$\sigma a$ = section efficace de production de paires $PP_{(i,j,k)}$
$Z_{(k)}$ = numéro atomique de l'élément atténuateur (k)

$\rho_{(k)}$ = masse volumique de l'élément atténuateur (k)

$A_{(k)}$ = masse atomique de l'élément atténuateur (k)

Coefficient d'atténuation$_{(j,i,k)}$ =exp ($-\mu_{a(i, j, k)}$ x $X_{(k)}$) avec : $X_{(k)}$ = épaisseur de l'élément atténuateur (k) Flux final$_{(i,j,k)}$= Flux initial$_{(j,j,k-1)}$ x Coefficient d'atténuation$_{(k)}$

1.1.2) Fin de boucle pour l'élément atténuateur (k) avec flux initial$_{(i,j,k-1)}$ pour k=1=flux initial$_{(i,j)}$ Scintillateur NaI :

$$\mu_{a_{(i,j)}^{(NaI)}} = \begin{bmatrix} \sigma a^{(NaI)} & + & Z_{(NaI)} & x & \sigma a^{(Nai)} \\ PE_{(j)} & & & & C_{(j)} \end{bmatrix} x \frac{Av}{A_{(NaI)}} \; x \; \rho_{(NaI)}$$

$$\text{Absorption}_{(i,j)(NaI)} = \text{Flux final}_{(i,j,k)} \; x \; \mu_{a_{(i,j)}^{(NaI)}} \; x \; X_{(NaI)}$$

avec :

$\sigma a^{(NaI)}_{PE_{(j)}}$ = section efficace (« cross section ») d'absorption photoélectrique pour NaI $Z_{(NaI)}$= numéro atomique moyen de NaI

$\sigma a^{(NaI)}$ = section efficace d'absorption Compton pour NaI $C_{(j)}$

$A_{(NaI)}$= masse atomique moyenne de NaI

$\rho_{(NaI)}$= masse volumique moyenne de NaI

$X_{(NaI)}$= épaisseur du scintillateur en NaI

1.1.3) Début de boucle pour procédure de tirage de valeurs pour l'absorption photoélectrique et Compton On calcule N=1200 valeurs vn par tirage de nombres aléatoires suivant une distribution gaussienne centrée sur une valeur moyenne égale à Energie$_{(j)}$ et ayant un écart-type égal à Résolution$_{(j)}$

Vn=vn x Absorption$_{(i,j)}$NaI

$$\sum_{n=1}^{N} Vn \; \text{donne Spectre absorption}_{(i,j)}\text{NaI}$$

1.1.4) Fin de boucle pour procédure de tirage de valeurs pour l'absorption photoélectrique et Compton Dôme Compton :

$$\text{Energie}_{(j')} = h\nu_{(j)}/(1+2h\nu_{(j)}/0,511)$$

$$\text{Résolution}_{(j')} = \text{Energie}_{(j')} \; x \; \alpha$$

$$\text{Diffusion dôme}_{(j')} = \sigma dif_{C_{(j')}} \; (NaI) \; x \; Z_{(NaI)} \; x \; \text{flux final}_{(i,j',k)} \; x \; \frac{Av}{A_{(NaI)}} \; x \; \rho_{(NaI)} \; x \; X_{(NaI)}$$

avec :

h = constante de Planck

$\nu_{(j)}$ = fréquence correspondant à l'énergie notée Energie$_{(j)}$, l'énergie de dôme Compton spécifique à NaI et notée Energie$_{(j')}$ étant l'énergie du photon diffusé qui est inférieure à Energie$_{(j)}$ $\sigma dif$

$C_{(j')}$ = section efficace de diffusion (« scattering ») Compton

1.1.5) Début de boucle pour procédure de tirage de valeurs pour la diffusion Compton
On calcule N=1200 valeurs vn par tirage de nombres aléatoires suivant une distribution gaussienne centrée sur une valeur moyenne égale à Energie(j') et ayant un écart-type égal à Résolution$_{(j')}$
Vn=vn x Diffusion dôme$_{(j')}$ NaI

$$\sum_{n=1}^{N} \text{Vn} \text{ donne Spectre diffusion}_{(i,j')}\text{NaI}$$

1.1.6) Fin de boucle pour procédure de tirage de valeurs pour la diffusion Compton
Front Compton (l'énergie de front Compton étant notée Energie$_{(j'')}$ et inférieure à Energie $_{(j)}$)

$$\text{Energie}_{(j'')} = \{ (2 \text{xhv}_{(j)}/0,511)/[1+(2\text{xhv}_{(j)}/0,511)]\}\text{xhv}_{(j)}$$

$$\text{Résolution}_{(j'')} = \text{Energie}_{(j'')}\text{x } \alpha$$

$$\text{Diffusion front}_{(j'')} = \sigma\text{dif (NaI)xZ}_{(NaI)}\text{xflux final}_{(i,j,k)}\text{x } \frac{\text{Av}}{\text{A}_{(NaI)}}\text{x}\rho_{(NaI)}\text{xX}_{(NaI)}$$
$$C_{(j'')}$$

avec :

σdif (NaI)=section efficace de diffusion sur le C(j")
front Compton

1.1.7) Début de boucle pour procédure de tirage de valeurs pour le front Compton
On calcule N=1200 valeurs vn par tirage de nombres aléatoires suivant une distribution gaussienne centrée sur une valeur moyenne égale à Energie$_{(j'')}$ et ayant un écart-type égal à Résolution$_{(j'')}$ Vn=vn x Diffusion front$_{(j'')}$NaI

$$\sum_{n=1}^{N} \text{Vn} \text{ donne Spectre diffusion}_{(i,j'')}\text{NaI}$$

1.1.8) Fin de boucle pour procédure de tirage de valeurs pour le front Compton Calcul du fond Compton (l'énergie du fond Compton étant notée Energie $_{(j''')}$ et inférieure à Energie$_{(j)}$)

$$\text{Energie}_{(j''')} = \text{hv}_{(j)}/(1+2\text{hv}_{(j)}/0,511)$$

$$\text{Résolution}_{(j''')} : \text{ fixée par expériences}$$

$$\text{Diffusion fond}_{(j''')} = \sigma\text{dif (NaI)xZ}_{(NaI)}\text{xflux final}_{(i,j,k)}\text{x } \frac{\text{Av}}{\text{A}_{(NaI)}}\text{x}\rho_{(NaI)}\text{xX}_{(NaI)}$$
$$C_{(j''')}$$

avec

=σdif = section efficace de diffusion sur le fond C$_{(j''')}$

Compton

1.1.9) Début de boucle pour procédure de tirage de valeurs pour le fond Compton

On calcule N=1200 valeurs vn par tirage de nombres aléatoires, suivant une distribution gaussienne centrée sur une valeur moyenne égale à $Energie_{(j''')}$ et ayant un écart-type égal à $Résolution_{(j''')}$

Vn=vn x Diffusion $fond_{(i,j''')}$NaI

$$\sum_{n=1}^{N} Vn \text{ donne Spectre } diffusion_{(i,\,j''')}NaI$$

1.1.10) Fin de boucle pour procédure de tirage de valeurs pour le fond Compton

1.2) Fin de boucle pour l'énergie (j)

2) Fin de boucle pour l'isotope (i)

On choisit alors une région d'intérêt ou bande d'énergie d'intérêt (par exemple de 75 keV à 100 keV) et l'on calcule le nombre d'impulsions $S = \sum_{i,j} \sum_{n=1}^{N}$ (Vn relatif à spectre d'$absorption_{(i,j)}$NaI) dans cette bande d'énergie.

On a donc négligé la diffusion mais, dans un autre mode de réalisation particulier, on pourrait en tenir compte.

On détermine ensuite expérimentalement $t_m$ qui est le pourcentage de temps mort global qui est propre à la chaîne de comptage 7 du détecteurr D et l'on calcule $Sxt_m$.

On peut alors refaire tous les calculs pour d'autres régions d'intérêt c'est-à-dire des bandes d'énergie différentes.

## Revendications

1.  Procédé de simulation de la réponse d'un détecteur (D) de rayonnements, à des rayonnements émis par des objets radioactifs connus (16), chaque objet contenant un radioélément connu ou un mélange connu de radioéléments connus, le détecteur étant relié à des moyens électroniques de mesure (7) formant une chaîne de comptage, procédé dans lequel :

    - on mémorise des spectres d'émission radioactive représentatifs des radioéléments ou des mélanges de ceux-ci,
    - on mémorise des caractéristiques de détection des rayonnements, ces caractéristiques de détection comprenant des données représentatives des épaisseurs traversées par les rayonnements avant la détection de ceux-ci.
    - on mémorise des caractéristiques d'exploitation des rayonnements reçus, ces caractéristiques d'exploitation comprenant l'angle d'ouverture du détecteur (D); les bandes d'énergies détectées et les caractéristiques d'amplification des moyens électroniques de mesure,
    - on choisit des radioéléments ou des mélanges de ceux-ci parmi ceux dont les spectres ont été mémorisés, et
    - on utilise un ordinateur pour traiter les caractéristiques de détection, les caractéristiques d'exploitation et les spectres, qui ont été mémorisés, pour reproduire, coup par coup, les rayonnements émis, pour les radioéléments ou les mélanges de radioéléments choisis, et obtenir ainsi la réponse simulée du détecteur aux rayonnements émis.

2.  Procédé selon la revendication 1, dans lequel on construit en outre des droites de régression à partir de la réponse simulée du détecteur aux rayonnements émis.

3.  Procédé selon l'une quelconque des revendications 1 et 2, dans lequel le détecteur (D) est un détecteur de rayonnements $\gamma$.

4.  Procédé selon l'une quelconque des revendications 1 à 3, dans lequel les objets sont des éléments de combustible nucléaire (16).

5.  Procédé de contrôle d'un ensemble d'éléments de combustible nucléaire (16) mettant en oeuvre le procédé selon l'une quelconque des revendications 1 à 3, procédé de contrôle dans lequel lesdits objets sont des éléments de combustible nucléaire et dans lequel .

- on analyse la composition réelle de l'un quelconque des éléments de l'ensemble,
- on effectue une calibration du détecteur (D) avec cet élément dont on a analysé la composition réelle,
- au moyen de la réponse du détecteur, obtenue lors de cette calibration, on corrige la réponse simulée du détecteur aux rayonnements émis, pour les radioéléments ou les mélanges de radioéléments, jusqu'à obtenir, pour l'élément dont on a analysé la composition réelle, une réponse simulée identique à celle fournie par le détecteur pour cet élément, et
- on contrôle l'ensemble des éléments au moyen du détecteur dont la réponse simulée a été corrigée.

6. Procédé selon la revendication 5, dans lequel les éléments sont des crayons du combustible nucléaire (16), ces crayons comprenant des empilements de pastilles (5) de ce combustible nucléaire.

7. Procédé selon la revendication 6, dans lequel le détecteur (D) comprend un scintillateur annulaire. (1).

8. Procédé selon l'une quelconque des revendications 6 et 7, dans lequel le détecteur (D) comprend un scintillateur en iodure de sodium (1).

**Claims**

1. Process for the simulation of the response of a radiation detector (D) to a radiation emitted by known radioactive objects (16), each object containing a known radioactive element or a known mix of known radioactive elements, the detector being connected to electronic measuring means (7) forming a counting chain, process wherein:

   - radioactive emission spectra representative of the radioactive elements or mixes thereof are stored,
   - radiation detection characteristics are stored,
   - said detection characteristics comprising data representative of the thicknesses traversed by the radiation prior to the detection thereof,
   - received radiation exploitation characteristics being stored, said characteristics comprising the aperture angle of the detector (D), the detected energy bands and the amplification characteristics of the electronic measuring means,
   - radioactive elements or mixes of the latter from among those whose spectra have been stored are chosen and
   - use is made of a computer for processing the detection characteristics, the operating characteristics and the spectra which have been stored in order to successively reproduce the radiation emitted, for the radioactive elements or the mixes of radioactive elements chosen, so as to obtain the simulated response of the detector to the radiation emitted.

2. Process according to claim 1, wherein regression lines are built up on the basis of the simulated response of the detector to the emitted radiation.

3. Process according to either of the claims 1 and 2, wherein the detector (D) is a gamma radiation detector.

4. Process according to any one of the claims 1 to 3, wherein the objects are nuclear fuel elements (16).

5. Process for the inspection of a set of nuclear fuel elements (16) using the process according to any one of the claims 1 to 3, wherein said objects are nuclear fuel elements and wherein:

   - analysis takes place of the real composition of any random one of the elements of the set,
   - a calibration of detector (D) takes place with said element, whose real composition has been analyzed,
   - by means of the response of the detector, obtained during said calibration, there is a correction of the simulated response of the detector to the emitted radiation for the radioactive elements or mixes of radioactive elements, until for the element whose real composition has been analyzed, a simulated response identical to that supplied by the detector for said element is obtained and
   - all the elements are inspected by means of the detector whose simulated response has been corrected.

6. Process according to claim 5, wherein the elements are nuclear fuel rods (16), which comprise stacks of nuclear fuel pellets (5).

7. Process according to claim 6, wherein the detector (D) comprises an annular scintillator (1).

8. Process according to either of the claims 6 and 7, wherein the detector (D) comprises a sodium iodide scintillator (1).

**Patentansprüche**

1. Verfahren zur Simulation der Antwort eines Detektors (D) für Strahlungen auf Strahlungen, die von bekannten radioaktiven Objekten (16) emittiert werden, wobei jedes Objekt ein bekanntes Radioelement oder eine bekannte Mischung von bekannten Radioelementen enthält, wobei der Detektor mit elektronischen Meßmitteln (7) verbunden ist, die eine Zählkette bilden, bei welchem Verfahren:

   - man Spektren radioaktiver Emission speichert, die repräsentativ sind für die Radioelemente oder für die Mischungen derselben,
   - man Detektionseigenschaften der Strahlungen speichert, wobei diese Detektionseigenschaften Daten umfassen, die repräsentativ sind für die Dicken, die von den Strahlungen vor ihrer Detektion durchquert werden,
   - man Auswertungseigenschaften der empfangenen Strahlungen speichert, wobei diese Auswertungseigenschaften den Öffnungswinkel des Detektors (D), die detektierten Energiebänder und die Verstärkungseigenschaften der elektronischen Meßmittel umfassen,
   - man Radioelemente oder Mischungen derselben aus jenen auswählt, deren Spektren gespeichert worden sind, und
   - man einen Rechner verwendet, um die Detektionseigenschaften, die Auswertungseigenschaften und die Spektren, die gespeichert worden sind, zu verarbeiten, um Schritt für Schritt die emittierten Strahlungen für die gewählten Radioelemente oder die Mischungen von Radioelementen zu reproduzieren und somit die simulierte Antwort des Detektors auf die emittierten Strahlungen zu simulieren.

2. Verfahren nach Anspruch 1, bei dem man ferner Regressionsgeraden ausgehend von der simulierten Antwort des Detektors auf die emittierten Strahlungen konstruiert.

3. Verfahren nach einem der Ansprüche 1 und 2, bei dem der Detektor (D) ein Gamma-Strahlen-Detektor ist.

4. Verfahren nach einem der Ansprüche 1 bis 3, bei dem die Objekte Kernbrennstoffelemente (16) sind.

5. Verfahren zur Kontrolle einer Gruppe von Kernbrennstoffelementen (16) unter Verwendung des Verfahrens nach einem der Ansprüche 1 bis 3, bei welchem Kontrollverfahren die Objekte Kernbrennstoffelemente sind, und bei dem:

   - man die reale Zusammensetzung eines der Elemente der Gruppe analysiert,
   - man eine Kalibrierung des Detektors (D) mit diesem Element durchführt, dessen reale Zusammensetzung man analysiert hat,
   - man mit Hilfe der Antwort des Detektors, die während dieser Kalibrierung erhalten worden ist, die simulierte Antwort des Detektors auf die emittierten Strahlungen für die Radioelemente oder die Mischungen von Radioelementen korrigiert, bis man für das Element, dessen reale Zusammensetzung man analysiert hat, eine simulierte Antwort erhält, die identisch zu jener ist, die vom Detektor für dieses Element geliefert wird, und
   - man die Gruppe von Elementen mit Hilfe des Detektors kontrolliert, dessen simulierte Antwort korrigiert worden ist.

6. Verfahren nach Anspruch 5, bei dem die Elemente Kernbrennstäbe (16) sind, wobei diese Stäbe Stapel von Pastillen (5) aus diesem Kernbrennstoff enthalten.

7. Verfahren nach Anspruch 6, bei dem der Detektor (D) einen Ringszintillator (1) umfaßt.

8. Verfahren nach einem der Ansprüche 6 und 7, bei dem der Detektor (D) einen Natriumiodid-Szintillator (1) umfaßt.

FIG.1

EP 1 105 751 B1

FIG. 2

**EP 1 105 751 B1**

## RÉFÉRENCES CITÉES DANS LA DESCRIPTION

**Documents brevets cités dans la description**

- FR 2437002 A
- EP 0009450 A
- JP 1527161 A
- EP 0280925 A